# EUROPEAN PATENT SPECIFICATION

(11) **EP 2 309 744 B1**
(45) Date of publication and mention of the grant of the patent: **13.04.2016**
(21) Application number: 10195299.2
(22) Date of filing: 29.09.2006
(51) Int. Cl.: G11B 20/10, G11B 20/00, H04N 21/2347, H04N 21/254, H04N 21/41, H04N 21/4405, H04N 21/835, H04N 21/84, H04N 21/854

(54) **Partial Encryption Techniques For Media Data**
Partielle Verschlüsselungstechniken für Mediendaten
Techniques de cryptage partiel pour données de média

(30) Priority: 10.10.2005 US 247955
(43) Date of publication of application: 13.04.2011
(62) Divisional of application: 06825302.0
(73) Proprietor: Apple Inc., Cupertino, CA 95014 (US)
(72) Inventor: Lindahl, Aram, Menlo Park, CA 94025 (US); Girish, Muthya, Santa Clara, CA 95051 (US); Duvivier, Christian, Redwood City, CA 94061 (US)
(74) Representative: Gillard, Matthew Paul

(56) References cited:
- EP-A- 1 359 758
- WO-A1-02/51096
- US-A1- 2003 138 100
- US-A1- 2004 049 694
- "Study Text of ISO/IEC 14496-1:2001/FPDAM3", ITU STUDY GROUP 16 - VIDEO CODING EXPERTS GROUP -ISO/IEC MPEG & ITU-T VCEG(ISO/IEC JTC1/SC29/WG11 AND ITU-T SG16 Q6), XX, XX, no. N4849, 10 July 2002 (2002-07-10), XP030012311,
- "ISO/IEC 14496-1:2001 3rd Edition", ITU STUDY GROUP 16 - VIDEO CODING EXPERTS GROUP -ISO/IEC MPEG & ITU-T VCEG(ISO/IEC JTC1/SC29/WG11 AND ITU-T SG16 Q6), XX, XX, no. n4406, 20 March 2002 (2002-03-20), XP030012014,

## Description

### BACKGROUND OF THE INVENTION

### Field of the Invention

The present invention relates to securing media data and, more particularly, to securing media data from unauthorized usage.

### Description of the Related Art

Today, audio or video information is often provided in a digital format. A digital format greatly simplifies its storage, transmission, play-back and modification of the audio or video information. However, given that digital audio and video require a large amount of digital data for proper representation, there are often difficulties with storage and transmission of media data for digital audio and video. As a result, it is common to compress the digital media data to reduce its size. For example, in the case of an input video stream, compression can be performed to reduce the overall size of the video stream. As another example, in a media file containing media data pertaining to digital audio or video, compression can be performed to reduce the size of the media file.

Compression techniques typically perform signal analysis, quantization and variable length encoding. The signal analysis generally operates to analyze and discard any information that is not discernible to a user. Each event can then be assigned to a code (i.e., quantized). The codes can then be encoded with variable length encoding, wherein those codes that are commonly occurring are assigned only a few bits, whereas those codes that rarely occur as assigned a greater number of bits. Four common methods of compression are: discrete cosine transform (DCT), vector quantization (VQ), fractal compression, and discrete wavelet transform (DWT). Various compression standards exist for digital audio and video. For example, there are various MPEG standards being used or in development by the Moving Picture Experts Group (MPEG).

Due to the advances in compression formats, digital audio and video files can have manageable sizes. However, another problem with digital audio and video is that it is easily copied or duplicated, and thus susceptible to widespread piracy.

One approach to unauthorized copying operates to encrypt the digital audio and video data within media files. Encryption generally refers to algorithmic schemes that encode plain text into cyphertext to provide privacy for the plain text. In the case of digital audio and video data, the text is the media data (media content). A receiver of the encrypted media data uses a "key" to decrypt the encrypted media data, so as to acquire the media data in the original, unsecured form. Encryption schemes are categorized as being symmetric or asymmetric. Symmetric key algorithms, such as Blowfish, AES and DES, work with a single, prearranged key that is shared between sender and receiver. This key both encrypts and decrypts the data. In asymmetric encryption schemes, such as RSA and Diffie-Hellman, a "key pair" is created for the user. The key pair typically includes a public-key and a private key. The public-key can be published so that senders of media data can use the public-key to encrypt media data that will be sent to a recipient that has access to the private key. Once encrypted, the encrypted media data cannot be decrypted except by one who has the private key of the key pair.

Unfortunately, however, these algorithmic schemes for encryption and decryption are computationally expensive. In addition, as encryption algorithms become more complex to provide greater privacy, the computational burden also increases. Many computing devices have high computational capabilities such that processing of encryption and decryption algorithms can be performed without difficulty. However, in the case of small-scale computing devices, such as embedded devices or highly portable computing devices which have limited computational capabilities because they are small in size and battery-powered, processing of encryption and decryption algorithms can overburden their limited resources. Thus, there is a need for improved techniques to process encryption and decryption algorithms on resource limited computing devices.

The "Study text of ISO/IEC 14496-1:2001/FPDAM3" discloses a method of encoding and decoding data using an IPMP tool.

### SUMMARY OF THE INVENTION

The invention pertains to improved techniques to partially encrypt media files. The encryption serves to cryptographically secure only a portion of the media data within a media file, while the remaining portion of the media data is not cryptographically secured. Although only partial encryption is used, the portion being encrypted serves to substantially disrupt usefulness of other parts of the media file which are not encrypted. In other words, the partial encryption renders the media file substantially unusable by unauthorized users.

In one embodiment, the partial encryption is performed by a host device and thereafter the partially encrypted media file is delivered to a client device. The client device, if authorized, can subsequently decrypt the partially encrypted media file and utilize (e.g., play) the media file. However, since the media files are only partially encrypted, the decryption is likewise also only partial, which makes decryption faster and less resource intensive.

The host device can be a server device or a personal computer, and the client device can be a personal computer or a portable media device. The invention is particularly well suited for use with portable media devices, such as handheld or palm-sized media players, which are battery powered and have limited computational capacity. Because decryption is only required on part of the data, decryption can be efficiently performed even on portable media devices, which helps preserve its battery resources.

The invention can be implemented in numerous ways including as a method, system, device, apparatus, or computer readable medium. Several embodiments of the invention are discussed below.

According to one aspect of the invention, a method for partially encrypting media data, having the features of claim 1, is provided.

According to another aspect of the invention, a media server having the features of claim 3 is provided.

### [INTENTIONALLY LEFT BLANK]

According to yet another aspect of the invention, a program executable by a media server, having the features of claim 7, is provided.

### [INTENTIONALLY LEFT BLANK]

Other aspects and advantages of the invention will become apparent from the following detailed description taken in conjunction with the accompanying drawings which illustrate, by way of example, the principles of the invention.

### BRIEF DESCRIPTION OF THE DRAWINGS

The invention will be readily understood by the following detailed description in conjunction with the accompanying drawings, wherein like reference numerals designate like structural elements, and in which:
FIG. 1 is a block diagram of a media distribution system according to one embodiment of the invention.
FIG. 2 is a block diagram of a media server according to one embodiment of the invention.
FIG. 3 is a flow diagram of media storage processing according to one embodiment of the invention.
FIG. 4 is a flow diagram of a media file encryption process according to one embodiment of the invention.
FIGs. 5A-5C illustrate one example of the media file encryption process.
FIG. 6A is a diagram of a partially encrypted block according to one embodiment.
FIG. 6B illustrates a partially encrypted block according to another embodiment.
FIG. 7 is a flow diagram of media purchase and download processing according to one embodiment of the invention.
FIG. 8 is a flow diagram of playback processing according to one embodiment of the invention.
FIG. 9 is a flow diagram of a media file decryption process according to one embodiment of the invention.
FIG. 10 is a block diagram of a media management system according to one embodiment of the invention.
FIG. 11 is a block diagram of a media player according to one embodiment of the invention.

### DETAILED DESCRIPTION OF THE INVENTION

The invention pertains to improved techniques to partially encrypt media files. The encryption serves to cryptographically secure only a portion of the media data within a media file, while the remaining portion of the media data is not cryptographically secured. Although only partial encryption is used, the portion being encrypted serves to substantially disrupt usefulness of other parts of the media file which are not encrypted. In other words, the partial encryption renders the media file substantially unusable by unauthorized users.

In one embodiment, the partial encryption is performed by a host device and thereafter the partially encrypted media file is delivered to a client device. The client device, if authorized, can subsequently decrypt the partially encrypted media file and utilize (e.g., play) the media file. However, since the media files are only partially encrypted, the decryption is likewise also only partial, which makes decryption faster and less resource intensive.

The host device can be a server device or a personal computer, and the client device can be a personal computer or a portable media device. The invention is particularly well suited for use with portable media devices, such as handheld or palm-sized media players, which are battery powered and have limited computational capacity. Because decryption is only partially required, decryption can be efficiently performed even on portable media devices, which helps preserve its battery resources.

The media data, for example, can be audio, video, or image data. The media data can also be referred to as media content or media (when referring to audio, video, or image data). The media data is typically contained in a file known as a media file. Such media files have a digital form and are stored on a data storage medium. For example, the data storage medium can pertain to a compact disc, a magnetic storage device, a semiconductor memory device, an optical storage device, etc.

A media player plays media, such as MP3 files, MPEG files, H.264 video files, Advanced Audio Coding (AAC) files, compact discs or DVDs, for the benefit of a user. In one embodiment, the media player can utilize a disk drive to provide mass storage of media content that is played by the media player. In another embodiment, the media player can utilize semiconductor memory (e.g., FLASH memory) to provide mass storage of media content that is played by the media player.

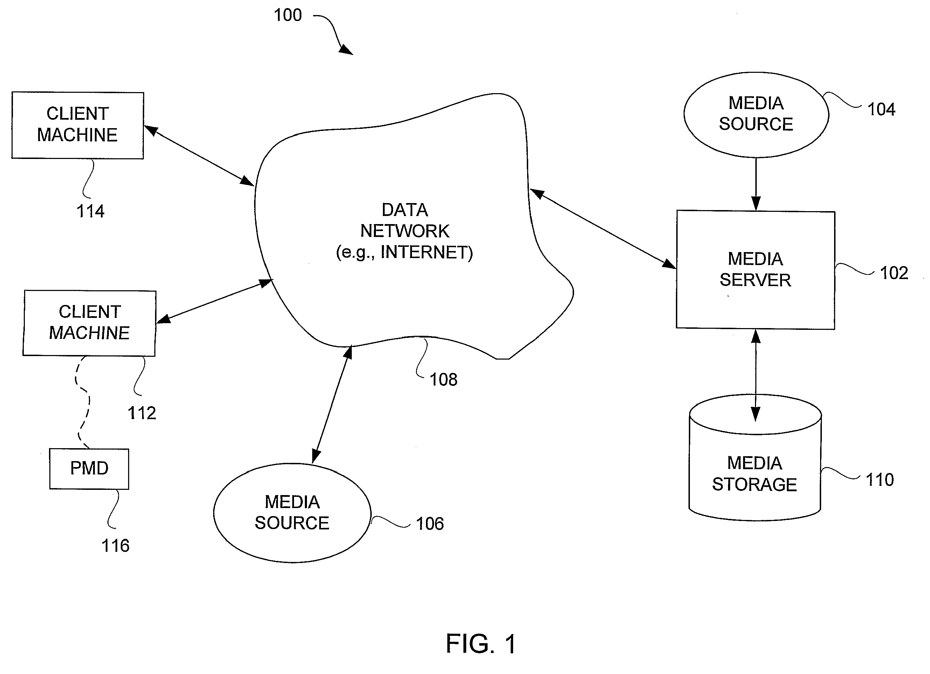

Embodiments of the invention are discussed below with reference to FIGs. 1 - 11. However, those skilled in the art will readily appreciate that the detailed description given herein with respect to these figures is for explanatory purposes as the invention extends beyond these limited embodiments.

FIG. 1 is a block diagram of a media distribution system 100 according to one embodiment of the invention. The media distribution system 100 includes a media server 102. The media server 102 stores, manages and downloads media files. The media files are provided to the media server 102 by a local media source 104 or a remote media source 106. The local media source 104 can, for example, be in the form of a compact disc (CD), a magnetic storage device, a digital versatile disk (DVD), or a disk drive. Typically, the local media source 104 is a removable medium that can be provided to a media company and delivered to the media server 102 at a hosting location. The remote media source 106 can pertain to a computing device that couples to the media server 102 through a data network 108, such as the Internet. The remote media source 106 can transmit or stream media files to the media server 102 through the data network 108. The media files that are received at the media server 102 from the media sources 104, 106 can be processed and then stored to a media storage 110. The processing of the media files at the media server 102 can secure the files using encryption and can also prepare the media files for download to prospective users (i.e., purchasers). According to one aspect of the invention, some or all of the media files that are to be encrypted are only partially encrypted by the media server 102.

The media distribution system 100 allows users of client machines 112 and 114 to access the media server 102 via the data network (e.g., Internet) 108. Accordingly, users of the client machines 112 and 114 are able to interact with the media server 102. Through such interaction, users of the client machines 112 and 114 are able to browse the media files stored in the media storage 110, select media files for purchase, download the purchased media files, and subsequently play the purchased media files at their respective client machines 112 and 114. The media distribution system 100 operates to impose limitations on access to the media files through encryption processes. The media distribution system 100 also causes usage restrictions to be imposed on the purchased media files that have been downloaded.

The client machines 112 and 114 are computing devices, either general-purpose or special purpose. For example, the client machines 112 and 114 can correspond to personal computers.

In recent times, computing devices have become smaller and more compact. The computing devices can also be designed for primarily stationary or portable usage. One type of portable computing device that the invention is suitable for use with are known as handheld computing devices. Handheld computing devices are sometimes more specialized computing devices than are general-purpose personal computers. For example, one type of handheld computing device is a portable (or personal) media player. In one embodiment, a portable media player can be a palm-sized computing device. Media players can also be referred to as consumer electronics products. A media player plays media, such as MP3 files, MPEG files, Advanced Audio Coding (AAC) files, H.264 video files, compact discs or DVDs, for the benefit of a user. In one embodiment, the media player can utilize a disk drive to provide mass storage of media content that is played by the media player.

Additionally, the client devices 112 and 114 can couple to other computing devices. As shown in FIG. 1, the client machine 112 can couple to a portable media device (PMD) 116. Such coupling can be provided in a wired or wireless manner. The portable media device 116 is, for example, a handheld computing device.

The media files that are downloaded to the client machines 112 and 114 are, in one embodiment, only partially encrypted. These media files received at the client machine 112 can also be provided to and stored on the portable media device 116. However, since these media files are partially encrypted, they need to be processed (i.e., decrypted) to remove the encryption before they are usable. Authorized users or devices are given the appropriate cryptographic information (e.g., keys and encryption parameters) to remove the partial encryption. After successful decryption, the media files can be presented (e.g., played) on the associated client machines 112 and 114 or the portable media device 116.

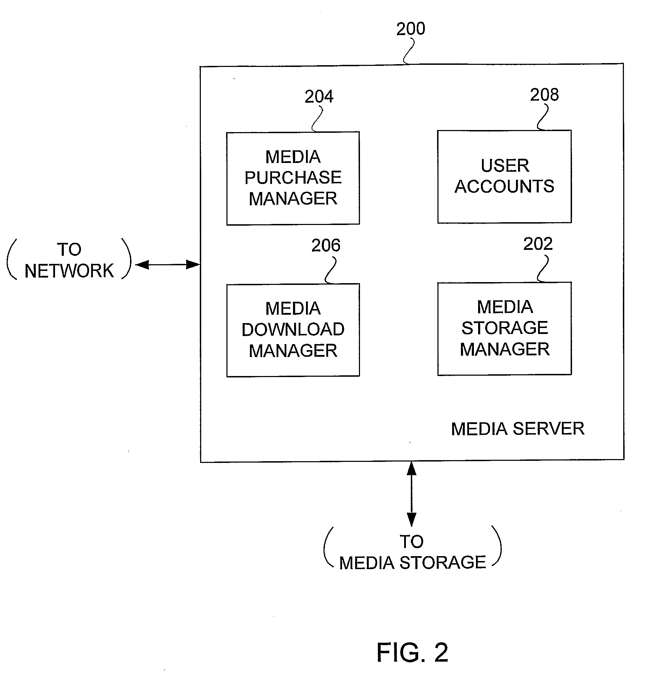

FIG. 2 is a block diagram of a media server 200 according to one embodiment of the invention. The media server 200 is, for example, suitable for use as the media server 102 illustrated in FIG. 1. In this regard, the media server 200 couples to a network (e.g., the data network 108) and a media storage (e.g., the media storage 110).

The media server 200 includes a media storage manager 202, a media purchase manager 204, a media download manager 206, and user accounts 208. The media storage manager 202 operates to receive incoming media files, to process the media files for eventual download, and to store the files to the media storage. The media purchase manager 204 assists users of client machines (e.g., the client machines 112 and 114 shown in FIG. 1) to purchase one or more media files through on-line interaction with the media server 200. Typically, the media purchase manager 204 would assist a user in completing an electronic commerce transaction to enable the user to purchase the right to receive and utilize one or more media files. The media download manager 206 facilitates the download of media files that have been purchased to the appropriate client machines of the users that have purchased the media files. The user accounts 208 store user information pertaining to users of the system. In one embodiment, the user information includes a set of user keys associated with each of the users. The user keys can be used by the media server 200 when encrypting media files for particular users that have purchased access rights thereto. Through management of the user keys for a user, the media server 200 can limit the number or type of client machine that is able to receive or make use of the media file.

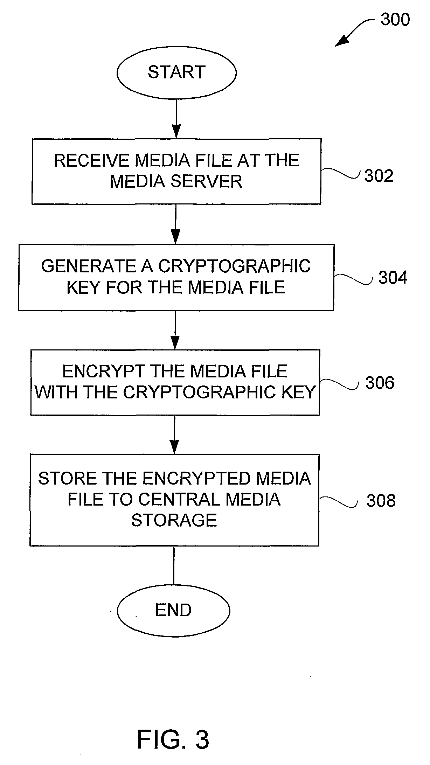

FIG. 3 is a flow diagram of media storage processing 300 according to one embodiment of the invention. The media storage processing 300 is, for example, performed by the media server 102 illustrated in FIG. 1 or the media storage manager 202 illustrated in FIG. 2.

The media storage processing 300 initially receives 302 a media file at the media server. The media file is constructed such that it includes media data and may further include metadata. The metadata describes characteristics of the data. For example, the metadata can indicate characteristics, such as name, artist, copyright information, title, etc. The metadata of the media file is optionally encrypted, such as with a global key. In one embodiment, the global key is used to encrypt the metadata for all the media files at the media server. In another embodiment, if desired, different global keys can be used with different media servers. Typically, the metadata is not that sensitive so the use of a common global key to encrypt such is adequate. However, if stronger encryption is desired, then more specialized keys can be used to increase the level of security. In another embodiment, the metadata is not encrypted.

A cryptographic key is generated 304 for the media file. In one embodiment, the cryptographic key is a substantially random secret key that is generated for each media file to be stored. Next, the media file is encrypted 306 with the download key. Here, the media file is encrypted 306 with the cryptographic key corresponding to that particular media file. At this point, the media file (encrypted media file) is secured through encryption and ready for download to potential users. After the media file is encrypted 306, the encrypted media file is stored 308 to a central media storage. In one embodiment, the central media storage is the media storage 110 of FIG. 1. Following the operation 308, the media storage processing 300 is complete and ends.

Once stored in the central media storage, the encrypted media file can be purchased and transmitted to the purchaser in its encrypted format to prevent unauthorized access to the media file. Hence, by storing the encrypted media files to the central media storage, the media files are stored in an encrypted manner and are ready to be downloaded with little or no further processing. Consequently, the server is able to be more efficient and handle greater demands for downloading of media files.

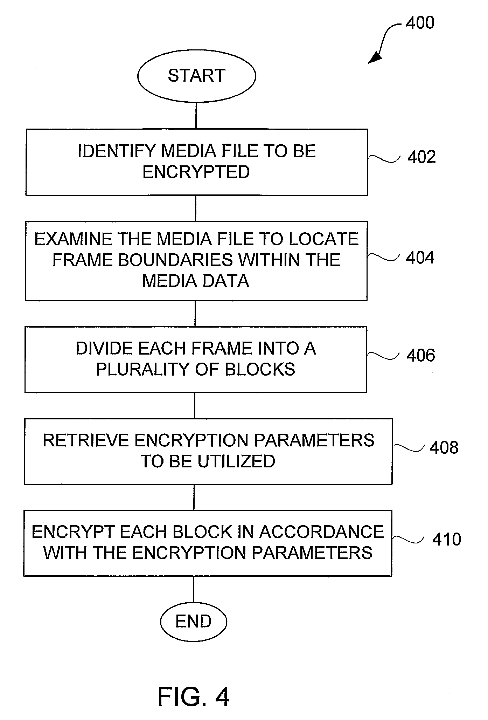

FIG. 4 is a flow diagram of a media file encryption process 400 according to one embodiment of the invention. The media file encryption process 400 is, for example, detailed processing associated with block 306 of the media storage processing 300 illustrated in FIG. 3.

The media file encryption process 400 initially identifies 402 a media file to be encrypted. For example, the media file can be identified 402, with or without the assistance of a user, by a computing device performing the media file encryption process 400. The media file is then examined 404 to locate frame boundaries within the media data. Here, it should be noted that the media file contains media data, and that the media data is such that it is arranged in frames that have frame boundaries. After the frame boundaries have been located, each frame is divided 406 into a plurality of blocks. In one embodiment, the size of the frames within the media file are not all the same size, but the size of the blocks all the same size. For example, if a media file for a video is a compressed or encoded in a H.264 video format, the frame size can vary from about 200 bits to 150k bits (e.g., depending on target resolution), and the block size can be about 512 bytes. The frames may not divide into an integer number of blocks. As a result, there may be a remainder block containing the balance of the media data for a frame that cannot be placed in a full block. The remainder block is not normally encrypted.

Additionally, encrypted parameters to be utilized with the media file encryption process 400 are retrieved 408. The encryption parameters can, in one embodiment, be provided on a per file basis. For example, the encryption parameters could be provided in the media file itself. However, more generally, the encryption parameters need not be provided within the media file. For example, the encryption parameters can be provided by a remote computing device, such as a server. In another embodiment, the encryption parameters can be provided on a more general basis, such as for a group of files, for a user, for a session, etc. In still another embodiment, the encryption parameters could be provided on a per frame or block basis, e.g., with each frame or block potentially having a different set of parameters. Regardless of how the encrypted parameters are provided, in one embodiment, the encryption parameters can be encrypted.

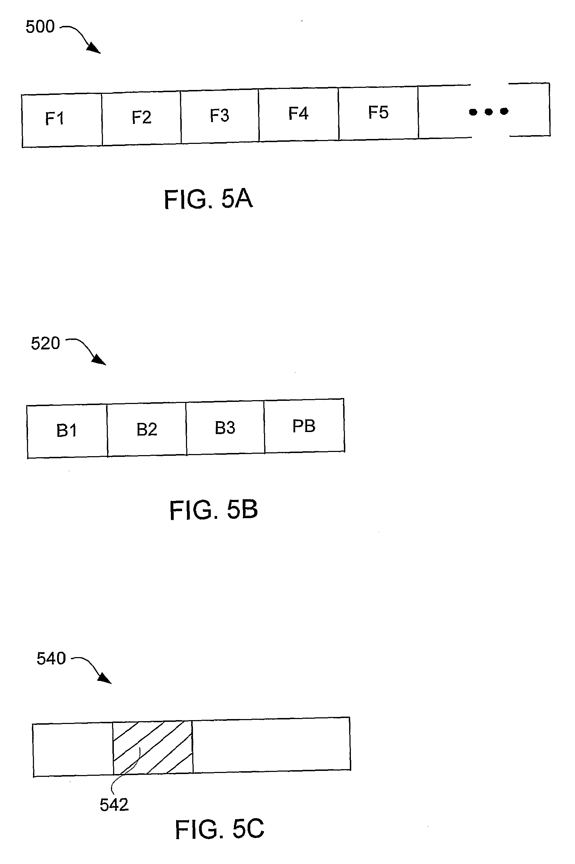

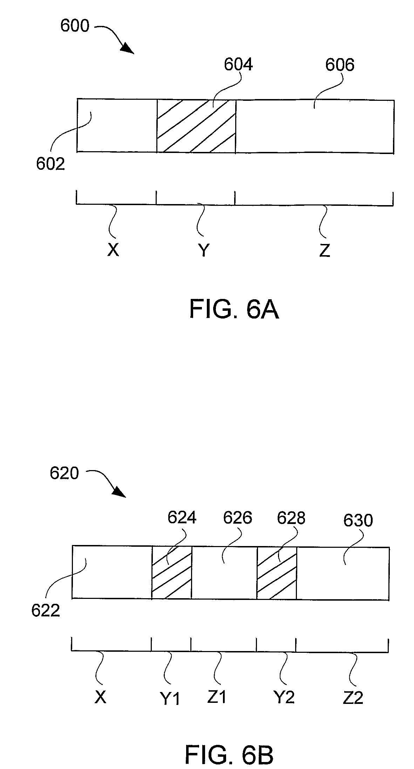

In any case, after the encryption parameters are retrieved 408, each block is encrypted 410 in accordance with the encryption parameters. The encryption of each block in accordance with the encryption parameters is discussed in greater detail below with respect to FIGs. 5A-5C and FIGs. 6A-6B. However, it should be understood that as noted in block 306 of FIG. 3, the encryption process also makes use of one or more encryption keys when encrypting each block. Following the block 410, the media file encryption process 400 is complete and ends.

FIGs. 5A-5C illustrate one example of the media file encryption process 400. FIG. 5A depicts a representative media file 500 that is to be encrypted. The media file includes a series of frames F1, F2, F3, F4, F5, etc. Frame boundaries exist between each of the different frames. Each of the frames contain header information and media data. In this representative example, the size of each of the frames are not all the same. In FIG. 5B, a representative one of the frames from the media file 500 is depicted as a frame 520. The frame 520 is divided into blocks B1, B2 and B3. Each of the blocks B1, B2 and B3 are of the same size. The frame 520 also includes a partial block (PB) at the end of the frame 520. The partial block represents the remaining data in the frame that is less than the size of the blocks. FIG. 5C illustrates a representative block 540 according to one example. The representative block 540 can represent any of the blocks B1, B2 or B3 of the frame 520 illustrated in FIG. 5B. As shown in FIG. 5C, only a portion of the block 540 is encrypted. More particularly, the block 540 includes an encrypted portion 542. The encrypted portion 542 is substantially less than the entire block 540. Hence, those portions of the block 540 other than the encrypted portion 542 remain unencrypted.

Partial encryption and the use of encryption parameters is discussed in additional detail below with reference to FIGs. 6A and 6B. The encryption parameters control the portion of a block that is to be encrypted. The remaining portions of a block that are not encrypted remain unencrypted (i.e., "in the clear").

FIG. 6A is a diagram of a partially encrypted block 600 according to one embodiment. The partially encrypted block 600 has an initial unencrypted portion 602, followed by an encrypted portion 604, and followed by an unencrypted portion 606. The size of the unencrypted portion 602 is denoted by the variable X, the size of the encrypted portion 604 is denoted by the variable Y, and the size of the unencrypted portion 606 is denoted by the variable Z. The size of the partially encrypted block 600 is the sum of the variables X, Y and Z. Although the encrypted portion 604 has a length or size of Y, prior to the encryption, the size of this same portion can also be denoted by the variable Y, or the size can be different than its size once encrypted. Although the length of the variables can vary widely with implementation, in one representative embodiment, the variables X, Y and Z can be sized as 16 bytes, 64 bytes and 512 bytes, respectively.

FIG. 6B illustrates a partially encrypted block 620 according to another embodiment. The partially encrypted block 620 includes an unencrypted portion 622, a first encrypted portion 624, an unencrypted portion 626, a second encrypted portion 628, and a final unencrypted portion 630. In this example, there are two separate parts of the partially encrypted block 620 that are encrypted. The unencrypted portion 622 has a length (e.g., number of bits or bytes) denoted by the variable X, the first encrypted portion 624 has a length indicated by the variable Y1, the unencrypted portion 626 has a length indicated by the variable Z1, the second encrypted portion 628 has a length indicated by the variable Y2, and the unencrypted portion 630 has a length indicated by the variable Z2. As compared to the partially encrypted block 600, the overall percentage being encrypted can be the same. In other words, the sum of the variables Y1 and Y2 can equal the variable Y, and the sum of the variables Z1 and Z2 can equal the variable Z.

The variable X denotes the size of the initial unencrypted portion 602 or 622 for the partially encrypted block 600 or 620. This initial portion, having its size denoted by the variable X, provides an offset into the partially encrypted block 600 or 620. This offset causes the encryption portion to begin somewhere internal to the block. Typically, a block will include various standard header information at the beginning of each block; hence, this type of information is generally known or easily determined. Accordingly, encrypting the initial portion of a block is not very effective at making a media file including such blocks unusable. Consequently, the partial encryption can be more effective when an initial offset into the block is utilized such as provided by the encryption parameter associated with the variable X. In one embodiment, the initial offset is larger than the entire header of a frame or block. In another embodiment, the initial offset is not larger than the entire header of a frame or block. In such case, a portion of the header could also be within that portion being encrypted. As an example, a header can include a code block containing code for symbols used in the encoding of the media file. In one embodiment, the portion being encrypted can include some or all of the code block, which can make decoding or other parts of the media file very difficult.

In one embodiment, the partially encrypted blocks 600 and 620 can represent all blocks of a given frame that are partially encrypted. In another embodiment, the partially encrypted blocks 600 and 620 can represent only the first of the blocks of a given frame. In such case, the subsequent blocks (other than any remainder block) can be partially encrypted using only two encryption parameters (e.g., Y and Z'), though the variable Z' in such an embodiment can represent the sum of variables X and Z.

In general, each partially encrypted block can have one or more portions encrypted and one or more portions unencrypted. Preferably, the one or more portions being encrypted are not at the start of the block. The portion to encrypt should be important and difficult to guess so that a decoder is disrupted and not able to easily recover from the errors produced by the partial encryption. The percentage or amount of partial encryption to be performed with respect to a block can be set by the encryption parameters. For the case of the partially encrypted block 600, the percentage of encryption being performed is determined by Y divided by X+Y+Z. In the case in which the offset parameter X is only used in the initial block of a given frame (as opposed to every block in the frame), then the percentage of encryption being performed can be estimated to be Y divided by Y+Z. For the case of the partially encrypted block 620, the percentage of encryption being performed is determined by Y1+Y2 divided by X+Y+Z.

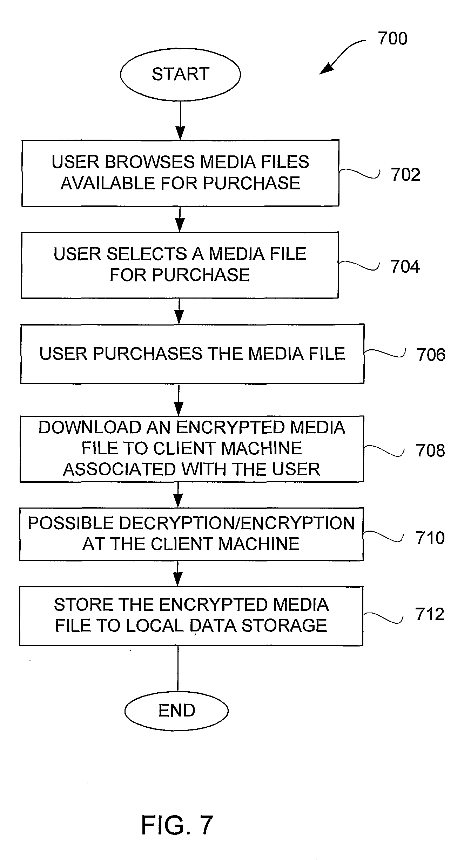

FIG. 7 is a flow diagram of media purchase and download processing 700 according to one embodiment of the invention. The media purchase and download processing 700 is, for example, performed by the media server 102 illustrated in FIG. 1 or by the media purchase manager 204 and the media download manager 206 of the media server 200 illustrated in FIG. 2.

The media purchase and download processing 700 initially permits a user to browse 702 media files that are available for purchase. Here, the user is able to browse the media files to assist the user in determining whether to purchase one or more of the media files. Often the user is able to view at least portions of the metadata for the media files, view text associated with the media files, and/or sample audio, graphics or video pertaining to the media files.

After the browsing 702, a user selects 704 a media file for purchase. Then, the user purchases 706 the media file and receives an associated cryptographic key. The user may also receive a global key or other cryptographic key when a media file is purchased. Here, the purchase of the media file can be an electronic commerce transaction in which the user pays for the access to the media file through any of a variety of financial transfer means, such as credit card, debit card, or payment assistance (e.g., PayPal, Neteller, pre-paid ATM, etc.).

Next, the media file is downloaded 708 to the user. In one embodiment, the download 708 of the media file can be performed by streaming the media file through the data network to the user, namely, to the user's client machine. Here, the downloading 708 of the media file can be efficient because the manner in which the media file can be stored facilitates its immediate download without the need for processing-intensive conversion.

Once the media file is downloaded 708, the media file can then be decrypted 710 at the user's local machine using the cryptographic key. The global key or other cryptographic key may also be used. If the metadata of the media file itself is encrypted, the metadata can also be decrypted using the global key which has previously been provided to the user who has purchased the access rights to the media file. Also, if decrypted 710, the media file can optionally be encrypted 710 again in accordance with another cryptographic key. This optional encryption 710 can be used to re-encrypt the media file for restricted usage by the user. Following the decryption/encryption 710, the encrypted media file is stored 712 to the local data storage. For example, the local data storage can be a disk drive, random-access memory, a removable media, etc. Also, in one embodiment, a database can be used to manage the storage of the modified media files in the local data storage. Any cryptographic keys being used with respect to the encrypted media file are also stored in the client machine. In one embodiment, the cryptographic keys are stored in a local data storage of the user's client machine. Following the operation 712, the media purchase and download processing 700 is complete and ends.

The media file, whether encrypted or not, can have a file format (i.e., encoding) that varies. The file format is typically dependent on the type of media. For example, when the type of media is video, one suitable file format is a H.264 format. Other suitable formats include QuickTime movies, MPEG-1 format, MPEG-2 format and MPEG-4 format.

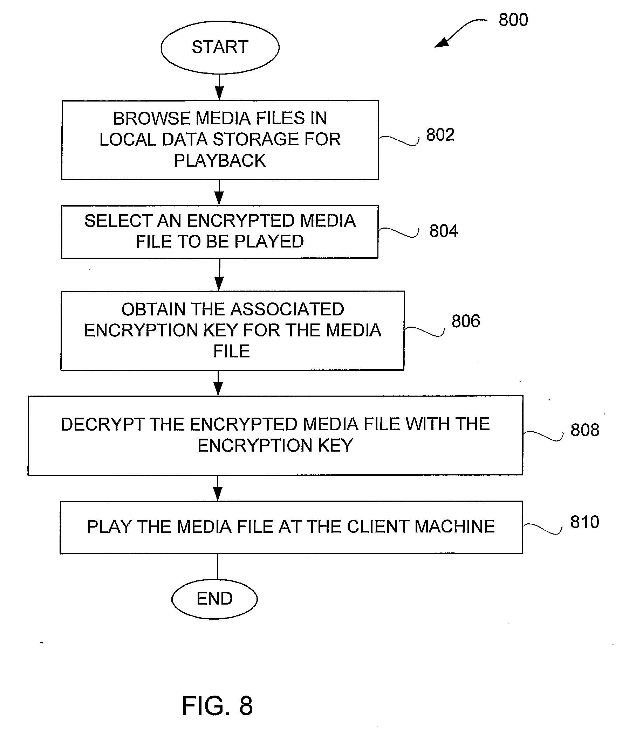

FIG. 8 is a flow diagram of playback processing 800 according to one embodiment of the invention. The playback processing 800 is performed at a client machine (user machine), such as the client machine 112, the client machine 114 or the portable media device 116 illustrated in FIG. 1. These devices can be desktop computers, notebook computers, handheld computers, personal digital assistants, media players, and various other devices.

The playback processing 800 allows a user of a client machine to browse 802 media files in the local data storage for playback. In other words, the media files that are available for playback can be searched, scanned or reviewed (e.g., pre-viewed) by the user. Typically, the user browses through the media files using the metadata for the media files or perhaps samples of the media files. Next, a media file to be played is selected 804. Then, the associated encryption key is obtained 706 from the selected media file. As previously noted, the media files that are stored to the local media storage have associated cryptographic keys also stored in the local media storage.

Next, the encrypted media file can be decrypted 808 using the associated encryption key. At this point, the media portion of the media file is in the "clear." Finally, the media portion of the media file is played 810 at the client machine. Following the operation 810, the playback processing 800 is complete and ends.

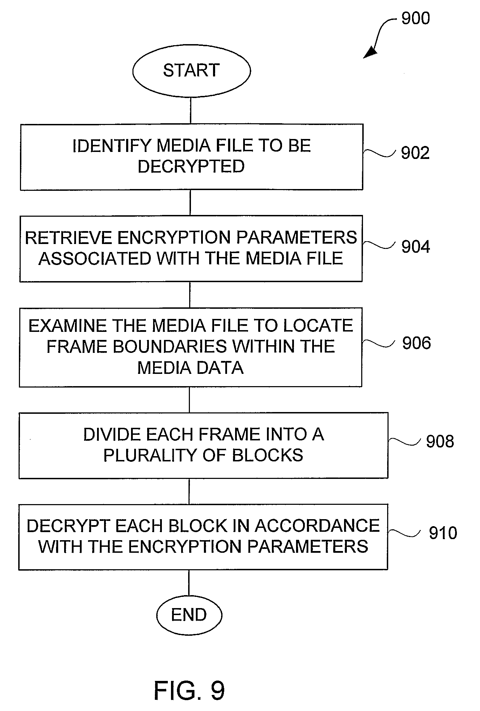

FIG. 9 is a flow diagram of a media file decryption process 900 according to one embodiment of the invention. The media file decryption process 900 is, for example, processing performed with respect to the block 808 illustrated in FIG. 8.

The media file decryption process 900 initially identifies 902 a media file to be decrypted. Typically, a media file would be decrypted when a user or device has requested to play the media file, such as noted in FIG. 8. After a media file to be decrypted has been identified 902, encryption parameters associated with the media file are retrieved 904. The encryption parameters can be the same parameters that were utilized with respect to the media file encryption process 400 illustrated in FIG. 4. The encryption parameters are again utilized to decrypt the media file that was previously encrypted. These encryption parameters can also be referred to as decryption parameters. In other words, the parameters for encryption and decryption are the same. Next, the media file is examined 906 to locate frame boundaries within the media data. Then, each frame is divided 908 into a plurality of blocks. Each block is then decrypted 910 in accordance with the encryption parameters. In addition, it should be recognized that the decryption of each block also makes use of one or more cryptographic keys as discussed above with respect to the block 808 illustrated in FIG. 8. After each block has been decrypted 910, the media file decryption process 900 ends.

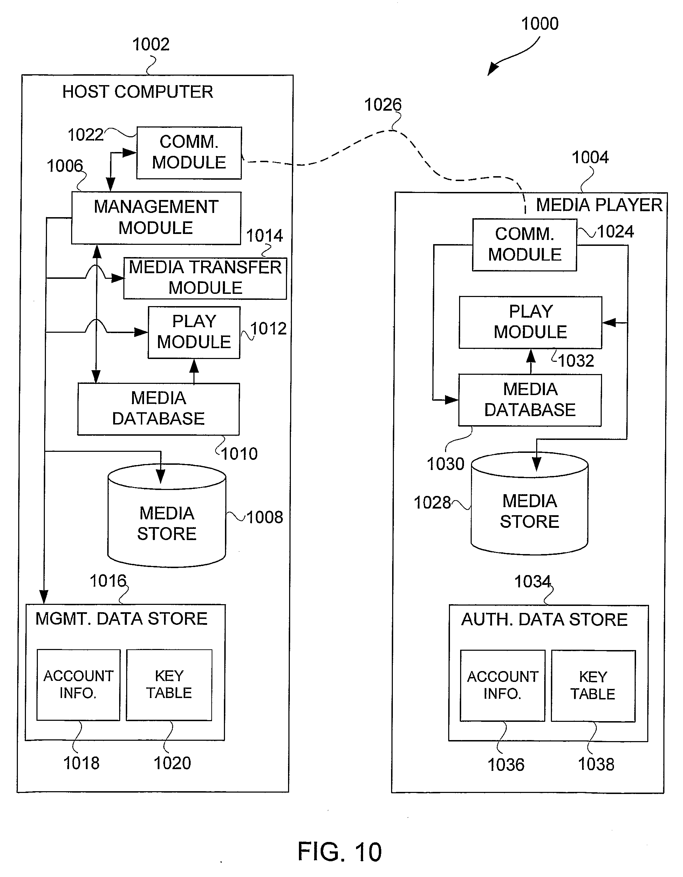

FIG. 10 is a block diagram of a media management system 1000 according to one embodiment of the invention. The media management system 1000 includes a host computer 1002 and a media player 1004. The host computer 1002 is typically a personal computer. For example, the host computer 1002 can represent the client machine 112 shown in FIG. 1, and the media player can represent the portable media device 116 shown in FIG. 1.

The host computer 1002, among other conventional components, includes a management module 1006 which is a software module. The management module 1006 provides for centralized management of media items (and/or playlists) not only on the host computer 1002 but also on the media player 1004. More particularly, the management module 1006 manages those media items stored in a media store 1008 associated with the host computer 1002. The management module 1006 also interacts with a media database 1010 to store media information associated with the media items stored in the media store 1008.

The media information pertains to characteristics or attributes of the media items. For example, in the case of audio or video (e.g., audiovisual) media, the media information can include one or more of: title, album, track, artist, composer and genre. These types of media information are specific to particular media items. In addition, the media information can pertain to quality characteristics of the media items. Examples of quality characteristics of media items can include one or more of: bit rate, sample rate, equalizer setting, volume adjustment, start/stop and total time.

Still further, the host computer 1002 includes a play module 1012. The play module 1012 is a software module that can be utilized to play certain media items stored in the media store 1008. The play module 1012 can also display (on a display screen) or otherwise utilize media information from the media database 1010. Typically, the media information of interest corresponds to the media items to be played by the play module 1012.

In addition, to facilitate transfer of media items from the host computer 1002 to the media player 1004, the host computer 1002 includes a media transfer module 1014 and a management data store 1016. The media transfer module 1014 can be a separate module as shown in FIG. 10 or can be part of the management module 1006. Also, the management data store 1016 can be a separate data store or can be part of the media store 1008 and/or the media database 1010. In any case, the media transfer module 1014 operatively couples to the management module 1006 as well as the management data store 1016. The media transfer module 1014 operates to facilitate transfer of secured media items to the media player 1004. In doing so, the media transfer module 1014 makes use of data stored in the management data store 1016. In particular, the management data store 1016 can include account information 1018 and a key table 1020. As an example, the account information 1018 and/or the key table 1020 can include one or more cryptographic keys.

When media items are secured so that they may be played or otherwise utilized only on a limited number of authorized computing devices, the transfer of such media items from an authorized computing device to another computing device, such as the media player 1004, by the media transfer module 1014 preferably operates to authorize the media player 1004 to utilize the secured media items. The media transfer module 1014 accesses the account information 1018 pertaining to the host computer or the user of the host computer 1002. The account information 1018, for example, can include at least a cryptographic key that is needed to gain access to the secured media item.

Furthermore, to prevent subsequent unauthorized distribution of the media item, the cryptographic key must remain secured once transferred to the media player 1004. In other words, the cryptographic key should be available for use by the media player 1004 but not otherwise in the clear. As a result, in one embodiment, the media transfer module 1014 uses at least one key obtained from the key table 1020 to encrypt the cryptographic key obtained from the account information 1018. The encrypted cryptographic key can then be transferred to the media player 1004. As discussed below, the media player 1004 has access to the corresponding key that enables the media player 1004 to access the cryptographic key and thereby play the media item at the media player 1004.

The host computer 1002 also includes a communication module 1022 that couples to a corresponding communication module 1024 within the media player 1004. A connection or link 1026 removeably couples the communication modules 1022 and 1024. In one embodiment, the connection or link 1026 is a cable that provides a data bus, such as a FIREWIRE® bus or USB bus, which is well known in the art. In another embodiment, the connection or link 1026 is a wireless channel or connection through a wireless network. Hence, depending on implementation, the communication modules 1022 and 1024 may communicate in a wired or wireless manner.

The media player 1004 also includes a media store 1028 that stores media items within the media player 1004. Optionally, the media store 1028 can also store data, i.e., non-media item storage. The media items being stored to the media store 1028 are typically received over the connection or link 1026 from the host computer 1002. More particularly, the management module 1006 sends all or certain of those media items residing on the media store 1008 over the connection or link 1026 to the media store 1028 within the media player 1004. Additionally, the corresponding media information for the media items that is also delivered to the media player 1004 from the host computer 1002 can be stored in a media database 1030. In this regard, certain media information from the media database 1010 within the host computer 1002 can be sent to the media database 1030 within the media player 1004 over the connection or link 1026. Still further, playlists identifying certain of the media items can also be sent by the management module 1006 over the connection or link 1026 to the media store 1028 or the media database 1030 within the media player 1004.

Furthermore, the media player 1004 includes a play module 1032 that couples to the media store 1028 and the media database 1030. The play module 1032 is a software module that can be utilized to play certain media items stored in the media store 1028. The play module 1032 can also display (on a display screen) or otherwise utilize media information from the media database 1030. Typically, the media information of interest corresponds to the media items to be played by the play module 1032.

However, it should be understood that since the media items are secured (i.e., encrypted), the play module 1032 must first locate the appropriate encrypted cryptographic key before a given media item can be played. Once the encrypted cryptographic key is located, the encrypted cryptographic key must be decrypted in order to be utilized to access a particular secured media item. In this regard, the media player 1004 includes an authorization data store 1034. The authorization data store 1034 can be a separate data store or can be part of the media store 1028 or in the media database 1030. The authorization data store 1034, in one embodiment, includes account information 1036 as well as a key table 1038. The encrypted cryptographic key(s) that have been transferred from the host computer 1002 to the media player 1004 can be stored in the account information 1036 and/or the key table 1038. An appropriate encrypted cryptographic key is located within the account information 1036 or the key table 1038, the corresponding key can be obtained from the key table 1038. The encrypted cryptographic key can then be decrypted using the key. The resulting cryptographic key can then be used to access the particular secured media item. Once the media item is accessible, the play module 1032 can proceed to play the media item at the media player 1004.

Hence, in one embodiment, the media player 1004 has limited or no capability to manage media items on the media player 1004. However, the management module 1006 within the host computer 1002 can indirectly manage the media items residing on the media player 1004. For example, to "add" a media item to the media player 1004, the management module 1006 serves to identify the media item to be added to the media player 1004 from the media store 1008 and then causes the identified media item to be delivered to the media player 1004. This also involves transfer of an encrypted cryptographic key that is associated with the identified media item. The cryptographic key is obtained from the account information 1018 (perhaps first decrypted), encrypted using another key, and then transferred to the account information 1036 of the media player. As another example, to "delete" a media item from the media player 1004, the management module 1006 serves to identify the media item to be deleted from the media store 1008 and then causes the identified media item to be deleted from the media player 1004. As still another example, if changes (i.e., alterations) to characteristics of a media item were made at the host computer 1002 using the management module 1006, then such characteristics can also be carried over to the corresponding media item on the media player 1004. In one implementation, the additions, deletions and/or changes occur in a batch-like process during synchronization of the media items on the media player 1004 with the media items on the host computer 1002.

In another embodiment, the media player 1004 has limited or no capability to manage playlists on the media player 1004. However, the management module 1006 within the host computer 1002 through management of the playlists residing on the host computer can indirectly manage the playlists residing on the media player 1004. In this regard, additions, deletions or changes to playlists can be performed on the host computer 1002 and then be carried over to the media player 1004 when delivered thereto.

As previously noted, synchronization is a form of media management. Synchronization can also be automatically initiated. Still further, however, the synchronization between devices can be restricted so as to prevent automatic synchronization when the host computer and media player do not recognize one another.

According to one embodiment, when a media player is first connected to a host computer (or even more generally when matching identifiers are not present), the user of the media player is queried as to whether the user desires to affiliate, assign or lock the media player to the host computer. When the user of the media player elects to affiliate, assign or lock the media player with the host computer, then a pseudo-random identifier is obtained and stored in either the media database or a file within both the host computer and the media player. In one implementation, the identifier is an identifier associated with (e.g., known or generated by) the host computer or its management module and such identifier is sent to and stored in the media player. In another implementation, the identifier is associated with (e.g., known or generated by) the media player and is sent to and stored in a file or media database of the host computer.

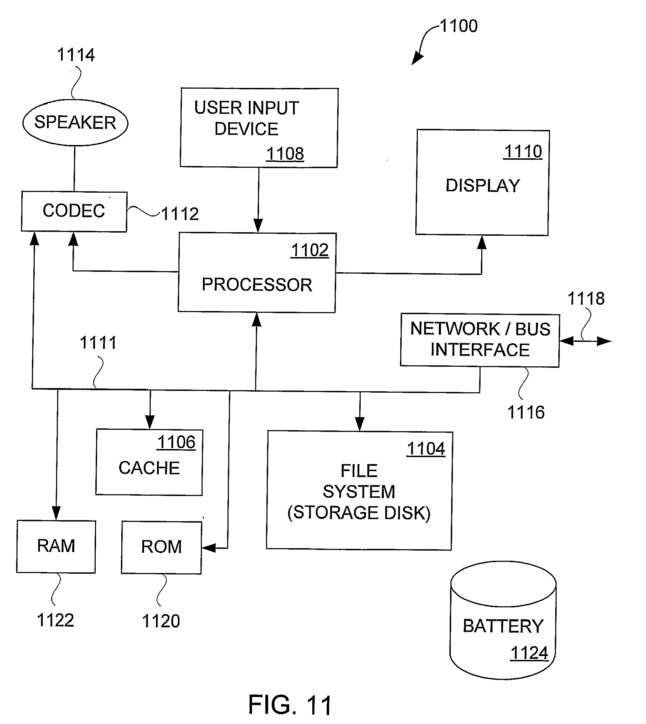

FIG. 11 is a block diagram of a media player 1100 according to one embodiment of the invention. The media player 1100 includes a processor 1102 that pertains to a microprocessor or controller for controlling the overall operation of the media player 1100. The media player 1100 stores media data pertaining to media items in a file system 1104 and a cache 1106. The file system 1104 is, typically, a storage disk or a plurality of disks. The file system 1104 typically provides high capacity storage capability for the media player 1100. The file system 1104 can store not only media data but also non-media data (e.g., when operated in a disk mode). However, since the access time to the file system 1104 is relatively slow, the media player 1100 can also include a cache 1106. The cache 1106 is, for example, Random-Access Memory (RAM) provided by semiconductor memory. The relative access time to the cache 1106 is substantially shorter than for the file system 1104. However, the cache 1106 does not have the large storage capacity of the file system 1104. Further, the file system 1104, when active, consumes more power than does the cache 1106. The power consumption is often a concern when the media player 1100 is a portable media player that is powered by a battery (not shown). The media player 1100 also includes a RAM 1120 and a Read-Only Memory (ROM) 1122. The ROM 1122 can store programs, utilities or processes to be executed in a non-volatile manner. The RAM 1120 provides volatile data storage, such as for the cache 1106.

The media player 1100 also includes a user input device 1108 that allows a user of the media player 1100 to interact with the media player 1100. For example, the user input device 1108 can take a variety of forms, such as a button, keypad, dial, etc. Still further, the media player 1100 includes a display 1110 (screen display) that can be controlled by the processor 1102 to display information to the user. A data bus 1111 can facilitate data transfer between at least the file system 1104, the cache 1106, the processor 1102, and the CODEC 1112.

In one embodiment, the media player 1100 serves to store a plurality of media items (e.g., songs) in the file system 1104. When a user desires to have the media player play a particular media item, a list of available media items is displayed on the display 1110. Then, using the user input device 1108, a user can select one of the available media items. The processor 1102, upon receiving a selection of a particular media item, the media data (e.g., audio file or video file) for the particular media item is first decrypted by the processor 1102 using processing discussed above and then supplied to a coder/decoder (CODEC) 1112. The CODEC 1112 then produces analog output signals for a speaker 1114 and/or the display 1110. The speaker 1114 can be a speaker internal to the media player 1100 or external to the media player 1100. For example, headphones or earphones that connect to the media player 1100 would be considered an external speaker.

The media player 1100 also includes a network/bus interface 1116 that couples to a data link 1118. The data link 1118 allows the media player 1100 to couple to a host computer. The data link 1118 can be provided over a wired connection or a wireless connection. In the case of a wireless connection, the network/bus interface 1116 can include a wireless transceiver.

The media items (or media assets) can be audio items (e.g., audio files, such as for songs or audiobooks). The media items can also pertain to video items (e.g., video files or movies) or image items (e.g., photos).

The various aspects, embodiments, implementations or features of the invention can be used separately or in any combination.

The invention is preferably implemented by software, but can also be implemented in hardware or a combination of hardware and software. The invention can also be embodied as computer readable code on a computer readable medium. The computer readable medium is any data storage device that can store data which can thereafter be read by a computer system. Examples of the computer readable medium include read-only memory, random-access memory, CD-ROMs, DVDs, magnetic tape, optical data storage devices, and carrier waves. The computer readable medium can also be distributed over network-coupled computer systems so that the computer readable code is stored and executed in a distributed fashion.

The advantages of the invention are numerous. Different aspects, embodiments or implementations may yield one or more of the following advantages. One advantage of the invention is that digital media data can be protected from unauthorized usage through encryption of only parts of the digital media data. Another advantage of the invention is that portable, battery-powered media devices can perform decryption in a power efficient manner since the computational burden to decrypt encrypted media files is substantially decreased through use of partial encryption. Still another advantage of the invention is that portable media devices can yield higher quality media output.

The many features and advantages of the present invention are apparent from the written description and, thus, it is intended by the appended claims to cover all such features and advantages of the invention. Further, since numerous modifications and changes will readily occur to those skilled in the art, the invention should not be limited to the exact construction and operation as illustrated and described. Hence, all suitable modifications and equivalents may be resorted to as falling within the scope of the invention. Before going on to set out the claims however, we shall first provide a set of clauses describing some embodiments of the invention:
*1. A method for encrypting media data, said method comprising:*
   *identifying a media file having media data to be encrypted, the media data being arranged in frames;*
   *examining the media data in the media file to locate frame boundaries for the frames within the media data;*
   *dividing each of the frames into a plurality of blocks;*
   *retrieving encryption parameters to be utilized; and*
   *encrypting each of the blocks in accordance with the encryption parameters.*
*2. A method as recited in clause 1, wherein said encrypting operates to encrypt only a portion of the media data pertaining to each of the blocks.*
*3. A method as recited in clause 1, wherein said encrypting is performed using an encryption key.*
*4. A method as recited in clause 1, wherein the encryption parameters are stored in the media file.*
*5. A method as recited in clause 1, wherein the encryption parameters are provided by a remote host computer or a remote server computer.*
*6. A method as recited in clause 1, wherein the encryption parameters serve to specify a portion of the media data within the blocks that is to be encrypted.*
*7. A method as recited in clause 1, wherein the encryption parameters include an offset amount and an encrypt amount.*
*8. A method as recited in clause 1, wherein the encryption parameters include an offset amount, an encrypt amount and a skip amount.*
*9. A method as recited in clause 1, wherein each of the blocks are the same size, and wherein at least a plurality of the frames within the media data have different sizes.*
*10. A method for encrypting media data, said method comprising:*
   *identifying a media file having media data to be encrypted, the media data being arranged in frames;*
   *examining the media data in the media file to locate frame boundaries for the frames within the media data;*
   *dividing each of the frames into a plurality of blocks; and*
   *encrypting only a portion of the media data pertaining to each of the blocks.*
*11. A method as recited in clause 10, wherein, for at least one of the blocks, said encrypting comprises:*
   *skipping a first amount of the media data;*
   *encrypting a second amount of the media data; and*
   *skipping a third amount of the media data.*
*12. A method as recited in clause 11, wherein the length of each of the blocks is equal to the summation of the first amount, the second amount and the third amount.*
*13. A method as recited in clause 10, wherein, for at least a plurality of the blocks, said encrypting comprises:*
   *encrypting a first amount of the media data; and*
   *skipping a second amount of the media data.*
*14. A method as recited in clause 13, wherein the length of each of the blocks is less than or equal to the summation of the first amount and the second amount.*
*15. A method as recited in clause 10, wherein said encrypting comprises:*
   *sequentially encrypting a first amount of the media data and then skipping a second amount of the media data such that each of the blocks will have an encrypted portion and an unencrypted portion.*
*16. A method as recited in clause 10, whereby subsequent decryption requires less computational operations since only a portion of the media data in the media file is encrypted.*
*17. A method for decrypting media data, said method comprising:*
   *identifying a media file having encrypted media data to be decrypted and unencrypted media data that requires no decryption, the media data being arranged in frames;*
   *retrieving encryption parameters associated with the media file;*
   *examining the media data in the media file to locate frame boundaries for the frames within the media data;*
   *dividing each of the frames into a plurality of blocks; and*
   *decrypting each of the blocks in accordance with the encryption parameters.*
*18. A method as recited in clause 17, wherein the encryption parameters identify the encrypted media data within each of the blocks.*
*19. A method as recited in clause 18, wherein said decrypting operates to decrypt only the encrypted media data within the media file.*
*20. A method as recited in clause 17, wherein said decrypting is performed using a cryptographic key.*

## Claims

1. A method performed by a media server (102) having at least a computer readable storage medium (110) arranged to store at least unencrypted media data, the method for partially encrypting the media data, wherein the media data is formed of frames (520), each of which is formed of a plurality of blocks (540), the method comprising:
identifying a media file (500) containing media data to be encrypted, the media data arranged in frames (520);
identifying at least two frames by locating corresponding frame boundaries in the identified media file, wherein the at least two frames are different sizes;
dividing each of the at least two frames into a corresponding plurality of equal-sized blocks and a remainder block containing a balance of the media data for a frame that cannot be placed in a full block, wherein the remainder block is not encrypted;
retrieving encryption parameters for each of the plurality of equal-sized blocks,
wherein the encryption parameters control a portion of a block that is to be encrypted; and
partially encrypting each frame by encrypting only a portion (542; 604; 624, 628) of each of the plurality of equal-sized blocks for each frame in accordance with the corresponding encryption parameters, wherein at least an initial portion (602; 622) of each of the equal-sized blocks (540) is unencrypted, wherein the initial portion provides an offset into the partially encrypted block (540) such that an encrypted portion of each of the blocks (540) begins internal to each of the equal-sized blocks (540) at an end of the initial portion, and wherein at least two of the equal-sized blocks are encrypted with different encryption parameters.

2. The method as recited in claim 1, wherein the encrypting further comprises:
encrypting a second amount of the media data of the partially encrypted blocks (540) that follows the unencrypted initial portion (540); and
not encrypting a third amount of the media data of the partially encrypted blocks (540) that follows the second amount of media data of the partially encrypted blocks (540).

3. A media server (102), comprising:
a computer readable storage medium (110) arranged to store at least unencrypted media data, the media data formed of frames each of which is formed of a plurality of blocks;
a processor for partially encrypting the media data by:
identifying a media file (500) containing media data to be encrypted, wherein the media data is arranged in frames (520),
identifying at least two frames by locating corresponding frame boundaries in the identified media file, wherein the at least two frames are different sizes,
dividing each of the at least two frames into a corresponding plurality of equal-sized blocks and a remainder block,
the remainder block containing a balance of the media data for a frame that cannot be placed in a full block, wherein the remainder block is not encrypted,
retrieving encryption parameters for each of the plurality of equal-sized blocks,
wherein the encryption parameters control a portion of a block that is to be encrypted, and
encrypting only a portion (542; 604; 624, 628) of the plurality of equal-sized blocks for each frame in accordance with the corresponding encryption parameters, wherein at least an initial portion (602; 622) of each of the equal-sized blocks (540) is unencrypted, wherein the initial portion provides an offset into the partially encrypted block (540) such that an encrypted portion of each of the blocks (540) begins internal to each of the equal-sized blocks (540) at an end of the initial portion, and wherein at least two of the equal-sized blocks are encrypted with different encryption parameters.

4. The media server as recited in claim 3, wherein the encrypting further comprises:
encrypting a second amount of media data of the partially encrypted blocks (540) that follows the unencrypted initial portion (540); and
not encrypting a third amount of the media data of the partially encrypted blocks (540) that follows the second amount of data of the partially encrypted blocks (540).

5. The media server as recited in claim 3, further comprising:
an interface for communication with a device external to the media server.

6. The media server as recited in claim 5 wherein a copy of the partially encrypted media file is transferred from the processor to the external device by way of the interface.

7. A program executable by a media server to cause the media server to perform a method according to any one of claims 1 or 2.

## Patentansprüche

1. Verfahren, das durch einen Medienserver (102) durchgeführt wird, der zumindest ein computerlesbares Speichermedium (110) aufweist, das angeordnet ist, um zumindest nicht verschlüsselte Mediendaten zu speichern, wobei das Verfahren zum teilweisen Verschlüsseln der Mediendaten ist, wobei die Mediendaten aus Rahmen (520) gebildet sind, von denen jeder aus einer Vielzahl von Blöcken (540) gebildet ist, wobei das Verfahren aufweist:
Identifizieren einer Mediendatei (500), die zu verschlüsselnde Mediendaten enthält, wobei die Mediendaten in Rahmen (520) angeordnet sind;
Identifizieren von zumindest zwei Rahmen durch Lokalisieren entsprechender Rahmengrenzen in der identifizierten Mediendatei, wobei die zumindest zwei Rahmen unterschiedliche Größen haben;
Aufteilen jedes der zumindest zwei Rahmen in eine entsprechende Vielzahl von gleich großen Blöcken und einem verbleibenden Block, der einen Rest der Mediendaten für einen Rahmen enthält, die nicht in einem vollständigen Block platziert werden können, wobei der verbleibende Block nicht verschlüsselt ist;
Wiedergewinnen von Verschlüsselungsparametern für jeden der Vielzahl von gleich großen Blöcken,
wobei die Verschlüsselungsparameter einen Abschnitt eines Blockes steuern, der verschlüsselt werden soll;
und
teilweise Verschlüsseln jedes Rahmens durch Verschlüsseln von nur einem Abschnitt (542; 604; 624, 628) von jedem der Vielzahl von gleich großen Blöcken für jeden Rahmen in Übereinstimmung mit den entsprechenden Verschlüsselungsparametern, wobei zumindest ein Anfangsabschnitt (602; 622) jedes der gleich großen Blöcke (540) nicht verschlüsselt ist, wobei der Anfangsabschnitt einen Versatz in den teilweise verschlüsselten Block (540) bereitstellt, so dass ein verschlüsselter Abschnitt jedes der Blöcke (540) intern zu jedem der gleich großen Blöcke (540) an einem Ende des Anfangsabschnitt beginnt, und wobei zumindest zwei der gleich großen Blöcke mit unterschiedlichen Verschlüsselungsparametern verschlüsselt sind.

2. Verfahren gemäß Anspruch 1, wobei die Verschlüsselung weiter aufweist:
Verschlüsseln einer zweiten Menge von Mediendaten der teilweise verschlüsselten Blöcke (540), die dem nicht verschlüsselten Anfangsabschnitt (540) folgen; und
Nichtverschlüsseln einer dritten Menge von Mediendaten der teilweise verschlüsselten Blöcke (540), die der zweiten Menge von Mediendaten der teilweise verschlüsselten Blöcke (540) folgt.

3. Medienserver (102), der aufweist:
ein computerlesbares Speichermedium (110), das angeordnet ist, um zumindest nicht verschlüsselte Mediendaten zu speichern, wobei die Mediendaten aus Rahmen gebildet sind, von denen jeder aus einer Vielzahl von Blöcken gebildet ist;
einen Prozessor zum teilweisen Verschlüsseln der Mediendaten durch:
Identifizieren einer Mediendatei (500), die zu verschlüsselnde Mediendaten enthält, wobei die Mediendaten in Rahmen (520) angeordnet sind,
Identifizieren von zumindest zwei Rahmen durch Lokalisieren entsprechender Rahmengrenzen in der identifizierten Mediendatei, wobei die zumindest zwei Rahmen unterschiedliche Größen haben,
Aufteilen jedes der zumindest zwei Rahmen in eine entsprechende Vielzahl von gleich großen Blöcken und einem verbleibenden Block,
wobei der verbleibende Block einen Rest der Mediendaten für einen Rahmen enthält, die nicht in einem vollständigen Block platziert werden können, wobei der verbleibende Block nicht verschlüsselt ist,
Wiedergewinnen von Verschlüsselungsparametern für jeden der Vielzahl von gleich großen Blöcken,
wobei die Verschlüsselungsparameter einen Abschnitt eines Blockes steuern, der verschlüsselt werden soll, und
Verschlüsseln nur eines Abschnittes (542; 604; 624, 628) der Vielzahl von gleich großen Blöcken für jeden Rahmen in Übereinstimmung mit den entsprechenden Verschlüsselungsparametern, wobei zumindest ein Anfangsabschnitt (602; 622) jedes der gleich großen Blöcke (540) nicht verschlüsselt ist, wobei der Anfangsabschnitt einen Versatz in den teilweise verschlüsselten Block (540) bereitstellt, so dass ein verschlüsselter Abschnitt jedes der Blöcke (540) intern zu jedem der gleich großen Blöcke (540) an einem Ende des Anfangsabschnitt beginnt, und wobei zumindest zwei der gleich großen Blöcke mit unterschiedlichen Verschlüsselungsparametern verschlüsselt sind.

4. Medienserver gemäß Anspruch 3, wobei das Verschlüsseln weiter aufweist:
Verschlüsseln einer zweiten Menge von Mediendaten der teilweise verschlüsselten Blöcke (540), die dem nicht verschlüsselten Anfangsabschnitt (540) folgt; und
Nichtverschlüsseln einer dritten Menge der Mediendaten der teilweise verschlüsselten Blöcke (540), die der zweiten Menge von Daten der teilweise verschlüsselten Blöcke (540) folgt.

5. Medienserver gemäß Anspruch 3, der weiter aufweist:
eine Schnittstelle zur Kommunikation mit einer Vorrichtung, die extern zu dem Medienserver ist.

6. Medienserver gemäß Anspruch 5, wobei eine Kopie der teilweise verschlüsselten Mediendatei von dem Prozessor zu der externen Vorrichtung über die Schnittstelle übertragen wird.

7. Programm, das durch einen Medienserver ausführbar ist, um zu veranlassen, dass der Medienserver ein Verfahren gemäß einem der Ansprüche 1 oder 2 durchführt.

## Revendications

1. Un procédé exécuté par un serveur de media (102) possédant au moins un support de stockage lisible par calculateur (110) configuré pour stocker au moins des données de media non cryptées, le procédé servant à crypter partiellement les données de media, les données de media étant formées de trames (520), dont chacune est formée d'une pluralité de blocs (540), le procédé comprenant :
l'identification d'un fichier de media (500) contenant des données de media à crypter, les données de media étant configurées en trames (520) ;
l'identification d'au moins deux trames par localisation de frontières de trame correspondantes dans le fichier de media identifié, les au moins deux trames étant de tailles différentes ;
la division de chacune des au moins deux trames en une pluralité correspondante de blocs de même taille et d'un bloc résiduel contenant un reliquat des données de media pour une trame qui ne peut pas être placée dans un bloc complet, le bloc résiduel n'étant pas crypté ;
la récupération de paramètres de cryptage pour chacun des blocs de la pluralité de blocs de même taille,
les paramètres de cryptage contrôlant une partie d'un bloc qui doit être crypté ; et
le cryptage partiel de chaque trame par cryptage de seulement une partie (542 ; 604 ; 624, 628) de chaque bloc de la pluralité de blocs de même taille pour chaque trame en fonction des paramètres de cryptage correspondants, au moins une partie initiale (602 ; 622) de chacun des blocs de même taille (540) n'étant pas cryptée, la partie initiale donnant un décalage dans le bloc partiellement crypté (540) de sorte qu'une partie cryptée de chacun des blocs (540) commence à l'intérieur de chacun des blocs de même taille (540) à une extrémité de la partie initiale, et au moins deux des blocs de même taille étant cryptés avec des paramètres de cryptage différents.

2. Le procédé de la revendication 1, dans lequel le cryptage comprend en outre :
le cryptage d'une seconde quantité des données de media des blocs partiellement cryptés (540) qui suit la partie initiale non cryptée (540) ; et
le non-cryptage d'une troisième quantité des données de media des blocs partiellement cryptés (540) qui suit la seconde quantité de données de media des blocs partiellement cryptés (540).

3. Un serveur de media (102), comprenant :
un support de stockage lisible par calculateur (110) configuré pour stocker au moins des données de media non cryptées, les données de media étant formées de trames dont chacune est formée d'une pluralité de blocs ;
un processeur pour le cryptage partiel des données de media par :
identification d'un fichier de media (500) contenant des données de media à crypter, les données de media étant configurées en trames (520) ;
identification d'au moins deux trames par localisation de frontières de trame correspondantes dans le fichier de media identifié, les au moins deux trames étant de tailles différentes ;
division de chacune des au moins deux trames en une pluralité correspondante de blocs de même taille et d'un bloc résiduel,
le bloc résiduel contenant un reliquat des données de media pour une trame qui ne peut pas être placée dans un bloc complet, le bloc résiduel n'étant pas crypté ;
récupération de paramètres de cryptage pour chacun des blocs de la pluralité de blocs de même taille, les paramètres de cryptage contrôlant une partie d'un bloc qui doit être crypté ; et
cryptage de seulement une partie (542 ; 604 ; 624, 628) de la pluralité de blocs de même taille pour chaque trame en fonction des paramètres de cryptage correspondants, au moins une partie initiale (602 ; 622) de chacun des blocs de même taille (540) n'étant pas cryptée, la partie initiale donnant un décalage dans le bloc partiellement crypté (540) de sorte qu'une partie cryptée de chacun des blocs (540) commence à l'intérieur de chacun des blocs de même taille (540) à une extrémité de la partie initiale, et au moins deux des blocs de même taille étant cryptés avec des paramètres de cryptage différents.

4. Le serveur de media de la revendication 3, dans lequel le cryptage comprend en outre :
le cryptage d'une seconde quantité de données de media des blocs partiellement cryptés (540) qui suit la partie initiale non cryptée (540) ; et
le non-cryptage d'une troisième quantité des données de media des blocs partiellement cryptés (540) qui suit la seconde quantité de données de media des blocs partiellement cryptés (540).

5. Le serveur de media de la revendication 3, comprenant en outre :
une interface pour la communication avec un dispositif externe au serveur de media.

6. Le serveur de media de la revendication 5, dans lequel une copie du fichier de media partiellement cryptée est transférée du processeur au dispositif externe au moyen de l'interface.

7. Un programme exécutable par un serveur de media pour faire en sorte que le serveur de media mette en oeuvre un procédé selon l'une des revendications 1 ou 2.
